# FASCICULE DE BREVET EUROPEEN

(11) **EP 4 477 384 B1**
(45) Date de publication et mention de la délivrance du brevet: **11.02.2026**
(21) Numéro de dépôt: 24177724.2
(22) Date de dépôt: 23.05.2024
(51) Int. Cl.: B29C 49/42, B29C 49/64, B29C 49/68, B29C 49/78, B29C 49/06, B29K 67/00, B29L 31/00

(54) **UNITE DE TRAITEMENT THERMIQUE DE PREFORMES COMPRENANT UN SYSTEME DE SECURITE DETECTANT UNE FUITE DE RAYONNEMENT**
EINHEIT ZUR WÄRMEBEHANDLUNG VON VORFORMLINGEN MIT EINEM SICHERHEITSSYSTEM ZUR DETEKTION VON STRAHLUNGSLECKAGEN
UNIT FOR THE THERMAL TREATMENT OF PREFORMS, COMPRISING A SECURITY SYSTEM DETECTING A RADIATION LEAK

(30) Priorité: 12.06.2023 FR 2305913
(43) Date de publication de la demande: 18.12.2024
(73) Titulaire: Sidel Participations, 76930 Octeville-sur-Mer (FR)
(72) Inventeur: FEUILLOLEY, Guy, 76930 OCTEVILLE-SUR-MER (FR); DANEL, Laurent, 76930 OCTEVILLE-SUR-MER (FR); LE PECHOUR, Anthony, 76930 OCTEVILLE-SUR-MER (FR); DERRIEN, Mikael, 76930 OCTEVILLE-SUR-MER (FR)
(74) Mandataire: Sidel Group

(56) Documents cités:
- WO-A1-2020/115575
- DE-A1- 102021 108 790
- FR-A1- 3 124 030
- US-A1- 2011 256 493
- US-B2- 8 921 808

## Description

La présente invention concerne une unité de traitement thermique de préformes d'une installation de fabrication récipients, du type comprenant une enceinte au sein de laquelle défilent les préformes selon un trajet prédéfini et au moins une paroi émettrice comprenant au moins un élément d'émission d'un rayonnement électromagnétique monochromatique ou pseudo-monochromatique agencé pour émettre ledit rayonnement vers les préformes circulant dans l'enceinte, ladite enceinte étant fermée au moins en partie par un carénage agencé pour empêcher ledit rayonnement de traverser le carénage vers l'extérieur de l'enceinte.

Une telle unité de traitement thermique, ou four, est généralement équipée d'une pluralité d'éléments de chauffage agencés pour émettre de la chaleur en direction de préformes en matériau synthétique défilant dans l'unité de traitement thermique afin d'appliquer un profil de chauffage sur ces préformes et permettre leur déformation ultérieure par exemple par étirage soufflage de sorte à réaliser des récipients à partir des préformes.

L'utilisation d'éléments d'émission d'un rayonnement électromagnétique monochromatique ou pseudo-monochromatique, ou émetteurs laser, en tant qu'éléments de chauffage est particulièrement bénéfique dans une telle unité de traitement thermique car de tels éléments offrent un rendement et une précision optique supérieurs à d'autres types d'éléments de chauffage, tels que des lampes à incandescence halogène, ce qui permet de réaliser une chauffe plus rapide et plus sélective des préformes.

Cependant, l'utilisation de tels émetteurs laser doit s'accompagner de précautions particulières en raison de la dangerosité du rayonnement émis pour les opérateurs évoluant autour de l'unité de traitement thermique. En effet, le rayonnement est émis dans le domaine de l'infrarouge et est invisible à l'œil nu et peut ainsi facilement engendrer des blessures graves non seulement pour les yeux, mais également pour la peau, des opérateurs qui ne sont pas nécessairement conscients de leur exposition à ce rayonnement.

Afin d'empêcher cette exposition, il est prévu de confiner autant que possible l'enceinte au sein de laquelle défilent les préformes pour limiter au maximum les fuites de rayonnement en dehors de l'enceinte. Pour ce faire, il est par exemple prévu de fermer l'enceinte avec un carénage comprenant des parois agencées pour bloquer le passage du rayonnement, ces parois encloisonnant l'enceinte et les éléments d'émission en laissant au moins une ouverture pour l'entrée et la sortie des préformes dans et hors de l'enceinte. Au moins certaines de ces parois sont amovibles afin de laisser un accès à l'enceinte pour des opérations de manutention et autre lorsque l'unité de traitement thermique est à l'arrêt et que les éléments d'émission n'émettent pas de rayonnement.

Avant toute mise en service de l'unité de traitement thermique, il convient donc de s'assurer de la présence de toutes les parois amovibles afin d'éviter les fuites de rayonnement à l'endroit de ces parois. Un opérateur est généralement chargé de vérifier que toutes les parois amovibles sont bien présentes avant d'autoriser le démarrage de l'unité de traitement thermique. Cependant, une telle vérification est sujette à erreurs et à oublis de la part de l'opérateur.

En cours de fonctionnement, il convient également de s'assurer qu'il n'y pas de fuite de rayonnement, notamment au niveau de l'ouverture de passage des préformes ou du fait d'une paroi endommagée, hors de l'enceinte. Ce rayonnement n'étant pas visible à l'œil nu, toute fuite de rayonnement est ainsi difficilement détectable.

L'un des buts de l'invention est de pallier cet inconvénient en proposant une unité de traitement thermique, dans laquelle toute fuite de rayonnement peut être facilement détectée.

A cet effet, l'invention concerne une unité de traitement thermique du type précité, comprenant en outre au moins un système de sécurité comprenant au moins un dispositif d'acquisition d'images disposé à l'extérieur du carénage et au moins un dispositif de traitement des images acquises par ledit dispositif d'acquisition d'images, ledit dispositif d'acquisition d'images acquérant des images au moins dans le domaine du proche infrarouge, les images acquises par ledit dispositif d'acquisition d'images étant aptes à montrer un rayonnement émis à l'extérieur du carénage, le dispositif de traitement étant configuré pour identifier la présence d'une fuite de rayonnement hors de l'enceinte si au moins une image acquise par ledit dispositif d'acquisition d'images montre un rayonnement émis à l'extérieur du carénage.

En utilisant un dispositif d'acquisition d'images dans le domaine du proche infrarouge et un dispositif de traitement des images acquises, il peut être facilement déterminé si l'enceinte présente une fuite de rayonnement et la zone dans laquelle cette fuite se produit. En choisissant un dispositif d'acquisition d'images adapté, il est également possible de vérifier de façon simple si les parois amovibles sont bien toutes présentes lors de la mise en marche de l'unité de traitement thermique.

L'unité de traitement thermique selon l'invention peut en outre comprendre une ou plusieurs des caractéristiques suivantes, considérées seules ou selon toute combinaison techniquement envisageable :
- ledit carénage comprend au moins une ouverture pour l'entrée et/ou la sortie des préformes dans et/ou hors de l'enceinte, au moins une image acquise par ledit dispositif d'acquisition d'images montrant au moins ladite ouverture ;
- le système de sécurité comprend en outre un dispositif d'alerte agencé pour émettre une alarme à destination d'un opérateur et/ou pour arrêter ou empêcher le fonctionnement de l'unité de traitement thermique si le dispositif de traitement identifie la présence d'une fuite de rayonnement hors de l'enceinte ;
- le dispositif d'alerte est déclenché lorsque le niveau de rayonnement détecté par le dispositif de traitement excède l'exposition maximale permise telle que définie dans la norme CEI 60825-1 et/ou la limite d'exposition protégée telle que définie dans la norme CEI 60825-4 ;
- le carénage comprend au moins une paroi amovible disposée dans une zone prédéfinie de l'enceinte, le dispositif d'acquisition d'images étant en outre agencée pour acquérir des images dans le domaine du visible, ledit dispositif d'acquisition d'images étant agencé pour acquérir au moins une image de ladite zone prédéfinie et le dispositif de traitement étant configuré pour détecter la présence ou non de ladite paroi amovible dans ladite image acquise ;
- la paroi amovible comprend au moins un élément d'identification, le dispositif d'acquisition d'images étant agencé pour acquérir au moins une image dudit élément d'identification, ledit dispositif de traitement étant configuré pour détecter la présence dudit élément d'identification dans ladite image acquise ;
- la paroi amovible délimite au moins une partie de l'ouverture ;
- le dispositif d'acquisition d'images comprend au moins une caméra captant des images au moins dans le domaine du proche infrarouge, ladite caméra étant orientée de sorte qu'au moins une partie du carénage s'étend dans le cadre de ladite caméra ;
- le système de sécurité comprend une pluralité de dispositifs d'acquisition d'images agencés pour acquérir chacun au moins une image d'une zone différente du carénage, le dispositif de traitement étant configuré pour identifier la présence d'une fuite de rayonnement hors de l'enceinte si au moins une image acquise par lesdits dispositifs d'acquisition d'images montre un rayonnement émis à l'extérieur du carénage ;
- le dispositif d'acquisition d'images est mobile par rapport à l'enceinte et/ou comprend au moins un élément mobile de sorte que le dispositif d'acquisition d'images acquiert des images d'une pluralité de zones du carénage en se déplaçant par rapport à l'enceinte pour détecter la présence ou non de fuites de rayonnement dans lesdites zones.

L'invention apparaîtra plus clairement à la lecture de la description qui va suivre, donnée uniquement à titre d'exemple non limitatif, et faite en référence aux dessins dans lesquels :
[Fig.1] - la [Fig.1] est une représentation schématique en perspective d'une partie d'une unité de traitement thermique selon l'invention, et
[Fig.2] - la [Fig.2] est une représentation schématique en perspective de l'unité de traitement thermique de la [Fig.1] sans les parois amovibles encloisonnant l'enceinte.

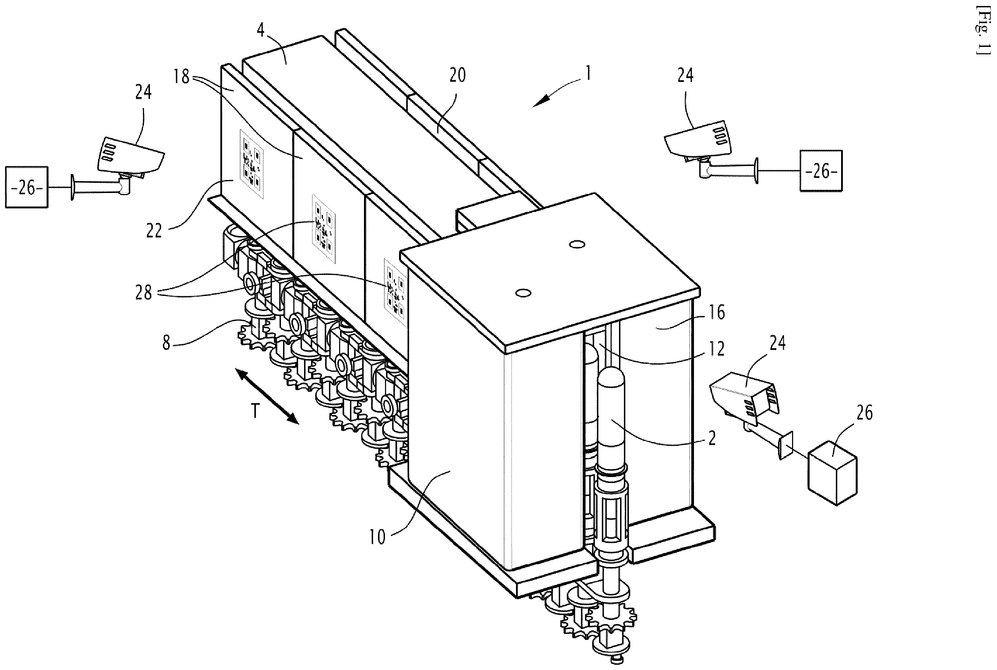

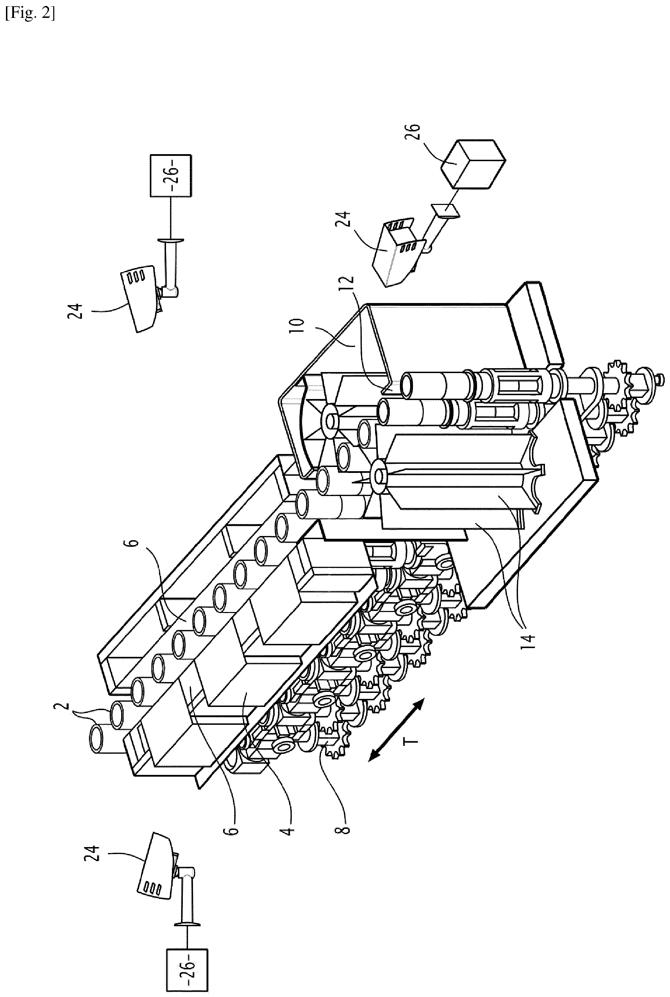

En référence aux Figs. 1 et 2, on décrit une unité de traitement thermique 1, ou four, d'une installation de fabrication de récipients à partir de préformes 2.

L'unité de traitement thermique comprend une enceinte 4 délimitée par deux parois 6 ([Fig.2]), dont au moins une est une paroi émettrice comprenant au moins un élément d'émission d'un rayonnement électromagnétique monochromatique ou pseudo-monochromatique. Les préformes 2 circulent au sein de l'enceinte 4 selon un trajet T de circulation prédéfini et définissant une direction longitudinale. Les parois 6 sont espacées l'une de l'autre selon une direction transversale sensiblement perpendiculaire à la direction longitudinale de sorte à s'étendre de part et d'autre du trajet T de circulation. Sur les Figs. 1 et 2, le trajet T a été représenté comme étant rectiligne, mais il est entendu qu'il pourrait être incurvé dans certaines configurations de l'installation de fabrication de récipients. Ainsi, en variante, les préformes 2 circulent au sein de l'enceinte 4 selon un trajet T de circulation prédéfini circulaire. L'unité de traitement thermique comprend un système de préhension et de déplacement 8 des préformes 2 selon le trajet de circulation T entre les parois 6. Les préformes 2 sont plus particulièrement maintenues de sorte que leur axe respectif s'étende selon une direction d'élévation sensiblement perpendiculaire à la direction longitudinale et à la direction transversale. En d'autres termes, la direction d'élévation correspond à la hauteur des préformes 2 et à la hauteur des parois 6. De façon connue, le système de préhension peut être agencé pour que les préformes 2 tournent autour de leur axe lorsqu'elles circulent selon le trajet T.

L'élément d'émission comprend par exemple une pluralité de sources de rayonnement électromagnétique monochromatique ou pseudo-monochromatique. Plus particulièrement, l'élément d'émission est par exemple un émetteur laser et les sources de rayonnement sont des puces laser agencées pour émettre un rayonnement laser dans le domaine de l'infrarouge selon une direction d'émission sensiblement parallèle à la direction transversale. Les sources de rayonnement sont par exemple agencées les unes à côté des autres et les unes au-dessus des autres sur un support de sorte à former des rangées de sources de rayonnement s'étendant selon la direction longitudinale.

De tels éléments d'émission sont par exemple décrits dans le document FR 3 124 030 et l'homme du métier pourra se référer à ce document pour obtenir plus de détail, notamment en ce qui concerne la structure de chaque source de rayonnement, l'agencement des sources de rayonnement sur un support, la connexion des sources de rayonnement entre elles et le refroidissement des éléments de chauffage.

La paroi 6 émettrice comprend par exemple une pluralité d'éléments d'émission tels que décrits ci-dessus, les éléments d'émission étant par exemple répartis au moins selon la direction longitudinale sur la paroi 6 et, en variante ou en complément, au moins selon la direction d'élévation sur la paroi 6.

Selon un mode de réalisation, les deux parois 6 sont des parois émettrices telles que décrites ci-dessus. Il convient de noter que chaque paroi 6 peut également comprendre des éléments réfléchissants agencés pour réfléchir le rayonnement issu des éléments d'émission de la paroi opposée. Un tel agencement d'enceinte est par exemple décrit dans le document FR 3 124 030 et l'homme du métier peut s'y référer.

Ainsi, en raison du grand nombre d'éléments d'émission et des réflexions à l'intérieur de l'enceinte, on comprend qu'un rayonnement peut facilement être émis en dehors de l'enceinte et présenter un risque pour les opérateurs évoluant autour de l'unité de traitement thermique. Le problème se pose notamment à l'entrée et à la sortie de l'enceinte 4, c'est-à-dire à l'endroit où les préformes 2 entrent et sortent de l'enceinte. En effet, l'enceinte 4 doit être ouverte dans ces zones pour laisser un passage pour les préformes 2.

Selon un mode de réalisation, il est prévu au moins un sas 10 à l'entrée et/ou à la sortie de l'enceinte 4. Comme représenté sur la [Fig.2], un tel sas 10 est disposé en aval d'une ouverture 12 permettant l'entrée des préformes 2 dans l'enceinte 4 et en amont des parois 6 émettrices et/ou en amont de l'ouverture permettant la sortie des préformes 2 de l'enceinte 4 et en aval des parois 6 émettrices, l'amont et l'aval étant défini selon le sens de circulation de préformes 2 dans l'enceinte 4. Un tel sas 10 est agencé pour limiter, voire supprimer, le rayonnement susceptible de passer par l'ouverture associée à ce sas 10 en formant un piège à rayonnement à l'intérieur du sas. A cet effet, le sas 10 est par exemple pourvu de boucliers 14 s'étendant dans le trajet T prédéfini des préformes 2 lorsqu'elles traversent le sas 10, par exemple entre les préformes 2 successives, afin de bloquer le rayonnement orienté vers l'ouverture 12. Ces boucliers sont par exemple mobiles en rotation de sorte à former des tourniquets au sein desquels doivent passer les préformes 2 avant de passer entre les parois 6 émettrices et/ou après être passées entre ces parois 6. De tels sas 10 sont par exemple décrits dans le document WO 2011/110791 de sorte qu'ils ne seront pas décrits plus en détail ici. L'homme du métier pourra se référer à ce document pour avoir plus de détails sur l'implémentation et l'agencement de tels sas 10 dans une unité de traitement thermique 1.

Comme représenté sur la [Fig.1], l'enceinte 4 de l'unité de traitement thermique 1 est en outre encloisonnée dans un carénage 16 agencé pour empêcher le rayonnement émis dans l'enceinte 4 de sortir de cette enceinte 4. Ainsi, le carénage 16 est agencé pour isoler l'enceinte 4, autant que possible, du local dans lequel est placée l'unité de traitement thermique 1 afin que des opérateurs puissent circuler autour de l'unité de traitement thermique 1 sans risque d'être exposés au rayonnement émis dans l'enceinte 4. Ainsi, le carénage 16 ferme l'enceinte 4 le long du trajet T prédéfini, au moins des deux côtés de l'enceinte 4 selon la direction transversale et au moins au-dessus de l'enceinte 4 selon la direction d'élévation Z. A cet effet, le carénage 16 s'étend le long des parois 6, du côté extérieur de celles-ci, et recouvre l'espace s'étendant entre les parois 6 ainsi que les parois 6 au-dessus de l'enceinte 4. Du côté inférieur de l'enceinte 4, le carénage 16 comprend par exemple une ouverture en forme de fente pour laisser un passage au système de préhension et de déplacement 8 des préformes 2 entre l'intérieur de l'enceinte 4 et l'extérieur. Le carénage 16 définit en outre l'ouverture 12 pour l'entrée et/ou la sortie des préformes 2 dans et hors de l'enceinte 4, c'est-à-dire que cette ou ces ouvertures 12 sont pratiquées dans le carénage. Lorsqu'un ou des sas 10 sont prévus, le carénage 16 entoure également ceux-ci, comme représenté sur la [Fig.1].

Selon un mode de réalisation, le carénage 16 comprend au moins une paroi amovible 18 formant une partie du carénage 16. Par paroi amovible 18, on entend que la paroi amovible 18 peut être séparée de façon réversible du reste du carénage 16 et de l'enceinte 4, par exemple pour libérer un accès à l'enceinte 4 et aux éléments s'étendant dans l'enceinte 4 pour des opérations de maintenance ou autre. A cet effet, la paroi amovible 18 est par exemple montée sur un carter du carénage 16 par des éléments de fixation réversibles permettant la fixation de la paroi amovible 18 sur le carter et le démontage de la paroi amovible 18 pour la séparer du carter. La paroi amovible 18 s'étend entre une face interne 20, tournée vers l'intérieur de l'enceinte 4 lorsque la paroi amovible 18 est montée sur le carter, et une face externe 22, opposée à la face interne 20 et tournée vers l'extérieur de l'enceinte 4. La paroi amovible 18 est agencée pour empêcher le passage d'un rayonnement émis par les éléments d'émission de la face interne 20 à la face externe 22 de la paroi amovible 18. A cet effet, la paroi amovible 18 peut être réalisée en un matériau empêchant ce passage, par exemple en absorbant le rayonnement, ou la face interne 20 peut être revêtue d'un tel matériau. En variante, le matériau peut être un matériau réfléchissant le rayonnement. La paroi amovible 18 est par exemple conforme aux protecteurs passifs pour laser tels que définis par la norme CEI 60825-4.

La paroi amovible 18 est disposée dans une zone prédéfinie de l'enceinte 4. La zone prédéfinie correspond notamment à une zone dans laquelle le rayonnement émis par les éléments d'émission est susceptible de sortir de l'enceinte 4 en l'absence de la paroi amovible 18 et est bloqué par celle-ci lorsque la paroi amovible 18 est montée sur le reste du carénage 16. Ainsi, la zone prédéfinie s'étend par exemple à un bord de l'ouverture 12 de l'enceinte ou le long d'une partie de la paroi 6 émettrice ou en regard de celle-ci. En d'autres termes, la paroi amovible 18 définit par exemple au moins un bord de l'ouverture 12 de l'enceinte 4 et/ou s'étend en regard d'un ou plusieurs éléments d'émission selon la direction transversale.

Selon un mode de réalisation particulièrement avantageux et comme représenté sur la [Fig.1], le carénage 16 est formé d'un assemblage de parois amovibles 18, c'est-à-dire que le carénage 16 est entièrement démontable. Chaque paroi amovible 18 est disposée dans une zone prédéfinie de l'enceinte 4 et leur assemblage permet de fermer complètement l'enceinte 4 en dehors des zones dans laquelle l'enceinte 4 doit être ouverte comme décrit précédemment. On comprend ainsi que lorsque toutes les parois amovibles 18 sont montées sur l'enceinte 4, les fuites de rayonnement ne sont susceptibles de se produire qu'au niveau des ouvertures prévues dans l'enceinte 4 et que l'enceinte 4 peut être pourvue d'éléments pour réduire ces risques de fuite au niveau des ouvertures, tels que les sas 10 décrits précédemment. On comprend également que l'absence d'une paroi amovible 18 dans la zone prédéfinie correspondante peut entraîner une fuite de rayonnement au niveau de cette zone prédéfinie et entrainer un risque pour les opérateurs évoluant en regard de cette zone prédéfinie lorsque l'unité de traitement thermique est en marche.

L'unité de traitement thermique selon l'invention comprend un système de sécurité comprenant au moins un dispositif d'acquisition d'images 24 disposé à l'extérieur de l'enceinte 4, tourné vers au moins une partie du carénage 16 et agencé pour acquérir au moins une image d'au moins cette partie du carénage 16. Le système de sécurité comprend en outre un dispositif de traitement 26 des images acquises par le dispositif d'acquisition d'images 24 agencé pour déterminer la présence ou non d'une fuite de rayonnement hors de l'enceinte 4 à partir de l'image acquise. Ainsi, le système de sécurité permet de vérifier que le rayonnement émis par la ou les parois 6 émettrices ne s'échappe pas hors de l'enceinte 4, c'est-à-dire qu'il n'est pas arrêté par le carénage 16, au cours du fonctionnement de l'unité de traitement thermique. Selon un mode de réalisation, le système de sécurité comprend en outre un dispositif d'alerte agencé pour émettre une alarme à destination d'un opérateur et/ou pour arrêter ou empêcher le fonctionnement de l'unité de traitement thermique si le dispositif de traitement 26 détecte la présence d'une fuite de rayonnement. De la sorte, on s'assure que l'unité de traitement thermique ne fonctionne pas lorsqu'une fuite de rayonnement à l'extérieur de l'enceinte 4 est détectée ou au moins que les opérateurs évoluant autour de l'unité de traitement thermique sont prévenus de la présence d'une fuite et peuvent prendre les mesures appropriées.

Le dispositif d'acquisition d'images 24 est agencé à l'extérieur de l'enceinte 4 et acquiert des images du côté externe du carénage 16, comme représenté sur la [Fig.1].

Le dispositif d'acquisition d'images 24 comprend par exemple au moins une caméra captant des images au moins dans le domaine du proche infrarouge, la caméra étant orientée de sorte qu'au moins une partie du carénage 16 s'étend dans le cadre de la caméra. Par proche infrarouge, on entend une longueur d'onde sensiblement comprise entre 0.7 µm et 1.6 µm.

Plus particulièrement, le dispositif d'acquisition d'images 24 est positionné pour qu'au moins une ouverture 12 se trouve dans le cadre des images acquises. En effet, l'ouverture 12 d'entrée et/ou de sortie des préformes 2 dans et hors de l'enceinte 4 est l'endroit où une fuite de rayonnement est le plus susceptible de se produire, même lorsque des boucliers 14 tels que décrits précédemment sont prévus. Lorsque la même ouverture 12 permet l'entrée et la sortie des préformes ou lorsque l'ouverture d'entrée et l'ouverture de sortie sont adjacentes, un unique dispositif d'acquisition d'images 24 peut être prévu pour détecter la présence de fuite au niveau de la ou des ouvertures 12. Lorsque les ouvertures d'entrée et de sortie sont séparées, un dispositif d'acquisition d'images 24 par ouverture est de préférence prévu afin de surveiller la présence de fuite au niveau de chacune des ouvertures 12. Le ou les dispositifs d'acquisition d'images 24, ou des dispositifs d'acquisition d'images 24 supplémentaires, peuvent également être positionnés pour détecter la présence éventuelle de fuite en d'autres endroits du carénage 16, notamment au niveau des parois amovibles 18 s'étendant le long des parois 6 émettrices, comme représenté sur la [Fig.1]. Ce mode de réalisation est avantageux, notamment pour détecter si une paroi amovible 18 est endommagée et laisse passer un rayonnement de la face interne 20 à la face externe 22.

Selon un mode de réalisation, le dispositif d'acquisition d'images 24 est en outre agencé pour acquérir des images dans le domaine du visible d'au moins une zone prédéfinie dans laquelle doit se trouver une paroi amovible 18. Le dispositif de traitement 26 peut alors être également utilisé pour déterminer la présence ou non de la paroi amovible 18 dans l'image acquise de la zone prédéfinie. Ainsi, le système de sécurité permet de vérifier que la paroi amovible 18 est bien en place par exemple avant toute mise en marche de l'unité de traitement thermique 1. Selon un mode de réalisation, le dispositif d'alerte est également agencé pour émettre une alarme à destination d'un opérateur et/ou pour arrêter ou empêcher le fonctionnement de l'unité de traitement thermique si le dispositif de traitement détecte l'absence de la paroi amovible 18 dans une zone prédéfinie. De la sorte, on s'assure que l'unité de traitement thermique ne fonctionne que lorsque la paroi amovible 18 a bien été mise en place.

Lorsque l'unité de traitement thermique 1 comprend plusieurs parois amovibles 18, notamment des parois amovibles 18 adjacentes les unes aux autres, le dispositif d'acquisition d'images 24 est agencé pour acquérir une ou plusieurs images de plusieurs parois amovibles 18, par exemple en prévoyant que le cadre de la caméra englobe plusieurs zones prédéfinies de sorte que l'acquisition d'une seule image par la caméra permet de détecter la présence d'une fuite de rayonnement dans toutes ces zones prédéfinies, voire la présence ou non de toutes ces parois amovibles 18. En variante ou en complément, le dispositif d'acquisition d'images 24 est mobile par rapport à l'enceinte 4 et/ou comprend une partie mobile, telle qu'un miroir, de sorte que le dispositif d'acquisition d'images peut acquérir des images d'une pluralité de zones prédéfinies pour détecter la présence ou non de fuites dans ces zones, voire la présence ou non de parois amovibles 18 dans ces zones prédéfinies. Le dispositif d'acquisition d'images 24 est ainsi par exemple mobile en rotation de sorte à balayer plusieurs zones prédéfinies et à acquérir au moins une image pour chacune de ces zones prédéfinies. Le dispositif de traitement 26 est alors configuré pour déterminer dans chaque image la présence ou non d'une fuite de rayonnement dans chacune des zones prédéfinies.

Le dispositif de traitement 26 d'image est configuré pour déterminer la présence ou non d'un rayonnement à l'extérieur de l'enceinte 4 en analysant les images acquises par le ou les dispositifs d'acquisition d'images. Une telle détermination est par exemple basée sur une analyse de la colorimétrie de l'image, une zone de l'image dans laquelle un rayonnement est présent apparaissant par exemple comme étant plus claire qu'une zone dans laquelle aucun rayonnement n'est présent. Selon un mode de réalisation, le dispositif de traitement 26 peut être configuré pour effectuer un traitement des images acquises afin de faire ressortir un éventuel rayonnement et/ou afin de déterminer l'intensité de ce rayonnement. Ainsi, à titre d'exemple, l'intervention du dispositif d'alerte peut être déclenchée lorsque le niveau de rayonnement détecté excède l'exposition maximale permise (EMP) telle que définie dans la norme CEI 60825-1 et/ou la limite d'exposition protégée (LEP) telle que définie dans la norme CEI 60825-4.

Le dispositif de traitement 26 d'image permet également de déterminer la zone dans laquelle une fuite de rayonnement se produit, de sorte que les opérateurs peuvent prendre les mesures nécessaires pour supprimer cette fuite de rayonnement. L'efficacité de ces mesures peut être déterminée en acquérant une nouvelle image de la zone concernée et en utilisant le dispositif de traitement 26 pour déterminer si une fuite est toujours présente dans cette zone.

Lorsque le système de sécurité est également agencé pour détecter la présence ou non d'une ou de plusieurs parois amovibles 18 dans une ou plusieurs zones prédéfinies, le dispositif de traitement 26 d'image6 est par exemple configuré pour comparer la ou les images acquises avec une image dans laquelle la ou les parois amovibles 18, correspondant à la ou aux zones prédéfinies dont les images sont acquises par le dispositif d'acquisition d'images 24, sont toutes présentes. Ainsi, le dispositif de traitement d'images permet de déterminer de façon simple si une paroi amovible 18 n'est pas présente dans une image dès lors qu'il y a une différence entre l'image traitée et l'image dans laquelle toutes les parois amovibles 18 sont présentes.

En variante ou en complément, chaque paroi amovible 18 peut comprendre au moins un élément d'identification 28, dont l'image est acquise par le dispositif d'acquisition d'images 24 au cours de la vérification de la présence de la paroi amovible 18. Le dispositif de traitement 26 d'image est alors configuré pour détecter la présence ou non de l'élément d'identification 28 dans l'image acquise par le dispositif d'acquisition d'images 24 afin de déterminer si la paroi amovible 18 est présente dans la zone prédéfinie. La détection de l'élément d'identification 28 peut permettre, en plus de vérifier la présence ou non de la paroi amovible 18, de déterminer si la paroi amovible 18 détectée est bien celle qui doit être placée dans la zone prédéfinie dont l'image a été acquise. En effet, l'élément d'identification 28 permet de rendre chaque paroi amovible 18 distincte des autres et d'associer de façon individuelle une paroi amovible 18 à une zone prédéfinie. La détection de l'élément d'identification 28 peut être faite en plus de la comparaison d'images décrite précédemment en remplacement de celle-ci, le repérage de l'élément d'identification dans une image pouvant être réalisé de façon plus simple que la comparaison d'images, notamment d'un point de vue logiciel. L'élément d'identification 28 est par exemple formé par un QR code, comme représenté sur la [Fig.1], ou par tout autre élément d'identification approprié, tel qu'n code barre ou autre. L'élément d'identification 28 est appliqué sur la face externe 22 de la paroi amovible 18.

Sur les figures, chaque dispositif d'acquisition d'images 24 est associé avec un dispositif de traitement 26 d'image. Il est cependant entendu qu'un même dispositif de traitement 26 d'imagepeut être utilisé pour plusieurs dispositifs d'acquisition d'images 24. En variante, les dispositifs d'acquisition d'images 24 et de traitement 26 d'image peuvent être fusionnés pour faire partie d'un même système, par exemple à l'intérieur d'un même boîtier.

Comme indiqué précédemment, la détection de la présence d'une fuite, voire de la présence des parois amovibles 18, est par exemple déclenchée avant toute mise en production de l'unité de traitement thermique 1 et cette mise en production est empêchée dès lors qu'au moins une fuite de rayonnement à l'extérieur de l'enceinte 4 est détectée.

## Revendications

1. Unité de traitement thermique (1) de préformes (2) d'une installation de fabrication de récipients, ladite unité de traitement thermique comprenant une enceinte (4) au sein de laquelle défilent les préformes (2) selon un trajet (T) prédéfini et au moins une paroi (6) émettrice comprenant au moins un élément d'émission d'un rayonnement électromagnétique monochromatique ou pseudo-monochromatique agencé pour émettre ledit rayonnement vers les préformes (2) circulant dans l'enceinte (4), ladite enceinte (4) étant fermée au moins en partie par un carénage (16) agencé pour empêcher ledit rayonnement de traverser le carénage (16) vers l'extérieur de l'enceinte (4), l'unité de traitement thermique étant **caractérisée en ce qu'**elle comprend en outre au moins un système de sécurité comprenant au moins un dispositif d'acquisition d'images (24) disposé à l'extérieur du carénage (16) et au moins un dispositif de traitement (26) des images acquises par ledit dispositif d'acquisition d'images (24), ledit dispositif d'acquisition d'images (24) acquérant des images au moins dans le domaine du proche infrarouge, les images acquises par ledit dispositif d'acquisition d'images (24) étant aptes à montrer un rayonnement émis à l'extérieur du carénage (16), le dispositif de traitement (26) étant configuré pour identifier la présence d'une fuite de rayonnement hors de l'enceinte (4) si au moins une image acquise par ledit dispositif d'acquisition d'images (24) montre un rayonnement émis à l'extérieur du carénage (16).

2. Unité de traitement thermique selon la revendication 1, dans laquelle ledit carénage (16) comprend au moins une ouverture (12) pour l'entrée et/ou la sortie des préformes (2) dans et/ou hors de l'enceinte (4), au moins une image acquise par ledit dispositif d'acquisition d'images (24) montrant au moins ladite ouverture (12).

3. Unité de traitement thermique selon la revendication 1 ou 2, dans laquelle le système de sécurité comprend en outre un dispositif d'alerte agencé pour émettre une alarme à destination d'un opérateur et/ou pour arrêter ou empêcher le fonctionnement de l'unité de traitement thermique si le dispositif de traitement (26) identifie la présence d'une fuite de rayonnement hors de l'enceinte (4).

4. Unité de traitement thermique selon la revendication 3, dans laquelle le dispositif d'alerte est déclenché lorsque le niveau de rayonnement détecté par le dispositif de traitement (26) excède l'exposition maximale permise (EMP) telle que définie dans la norme CEI 60825-1 et/ou la limite d'exposition protégée (LEP) telle que définie dans la norme CEI 60825-4.

5. Unité de traitement thermique selon l'une quelconque des revendications 1 à 4, dans laquelle le carénage (16) comprend au moins une paroi amovible (18) disposée dans une zone prédéfinie de l'enceinte (4), le dispositif d'acquisition d'images (24) étant en outre agencée pour acquérir des images dans le domaine du visible, ledit dispositif d'acquisition d'images (24) étant agencé pour acquérir au moins une image de ladite zone prédéfinie et le dispositif de traitement (26) étant configuré pour détecter la présence ou non de ladite paroi amovible (18) dans ladite image acquise.

6. Unité de traitement thermique selon la revendication 5, dans laquelle la paroi amovible (18) comprend au moins un élément d'identification (28), le dispositif d'acquisition d'images (24) étant agencé pour acquérir au moins une image dudit élément d'identification (28), ledit dispositif de traitement (26) étant configuré pour détecter la présence dudit élément d'identification (28) dans ladite image acquise.

7. Unité de traitement thermique selon la revendication 5 ou 6 lorsqu'elle dépend de la revendication 2, dans laquelle la paroi amovible (18) délimite au moins une partie de l'ouverture (12).

8. Unité de traitement thermique selon l'une quelconque des revendications 1 à 7, dans laquelle le dispositif d'acquisition d'images (24) comprend au moins une caméra captant des images au moins dans le domaine du proche infrarouge, ladite caméra étant orientée de sorte qu'au moins une partie du carénage (16) s'étend dans le cadre de ladite caméra.

9. Unité de traitement thermique selon l'une quelconque des revendications 1 à 8, dans laquelle le système de sécurité comprend une pluralité de dispositifs d'acquisition d'images (24) agencés pour acquérir chacun au moins une image d'une zone différente du carénage (16), le dispositif de traitement (26) étant configuré pour identifier la présence d'une fuite de rayonnement hors de l'enceinte (4) si au moins une image acquise par lesdits dispositifs d'acquisition d'images (24) montre un rayonnement émis à l'extérieur du carénage (16).

10. Unité de traitement thermique selon l'une quelconque des revendications 1 à 9, dans laquelle le dispositif d'acquisition d'images (24) est mobile par rapport à l'enceinte et/ou comprend au moins un élément mobile de sorte que le dispositif d'acquisition d'images (24) acquiert des images d'une pluralité de zones du carénage (16) en se déplaçant par rapport à l'enceinte (4) pour détecter la présence ou non de fuites de rayonnement dans lesdites zones.

## Patentansprüche

1. Einheit zur Wärmebehandlung (1) von Vorformlingen (2) einer Anlage zur Fertigung von Behältern, wobei die Wärmebehandlungseinheit eine Kammer (4), durch die die Vorformlinge (2) gemäß einer vordefinierten Bahn (T) hindurchlaufen, und mindestens eine emittierende Wand (6) beinhaltet, die mindestens ein Element zur Emission einer monochromatischen oder pseudo-monochromatischen elektromagnetischen Strahlung beinhaltet, das dazu eingerichtet ist, die Strahlung zu den in der Kammer (4) zirkulierenden Vorformlingen (2) zu emittieren, wobei die Kammer (4) mindestens teilweise durch eine Verkleidung (16) verschlossen ist, die dazu eingerichtet ist, zu verhindern, dass die Strahlung die Verkleidung (16) zur Außenseite der Kammer (4) hin durchquert, wobei die Wärmebehandlungseinheit **dadurch gekennzeichnet ist, dass** sie ferner mindestens ein Sicherheitssystem beinhaltet, das mindestens eine Bilderfassungsvorrichtung (24), die außerhalb der Verkleidung (16) angeordnet ist, und mindestens eine Vorrichtung zur Verarbeitung (26) der durch die Bilderfassungsvorrichtung (24) erfassten Bilder beinhaltet, wobei die Bilderfassungsvorrichtung (24) Bilder mindestens im Nahinfrarotbereich erfasst, wobei die durch die Bilderfassungsvorrichtung (24) erfassten Bilder dazu in der Lage sind, eine zur Außenseite der Verkleidung (16) emittierte Strahlung zu zeigen, wobei die Verarbeitungsvorrichtung (26) dazu konfiguriert ist, das Vorhandensein einer Strahlungsleckage aus der Kammer (4) heraus zu identifizieren, wenn mindestens ein durch die Bilderfassungsvorrichtung (24) erfasstes Bild eine zur Außenseite der Verkleidung (16) emittierte Strahlung zeigt.

2. Wärmebehandlungseinheit nach Anspruch 1, wobei die Verkleidung (16) mindestens eine Öffnung (12) für den Eintritt und/oder den Austritt der Vorformlinge (2) in und/oder aus der Kammer (4) beinhaltet, wobei mindestens ein durch die Bilderfassungsvorrichtung (24) erfasstes Bild mindestens die Öffnung (12) zeigt.

3. Wärmebehandlungseinheit nach Anspruch 1 oder 2, wobei das Sicherheitssystem ferner eine Warnvorrichtung beinhaltet, die dazu eingerichtet ist, einen Alarm an eine Bedienperson auszugeben und/oder den Betrieb der Wärmebehandlungseinheit zu stoppen oder zu verhindern, wenn die Verarbeitungsvorrichtung (26) das Vorhandensein einer Strahlungsleckage aus der Kammer (4) heraus detektiert.

4. Wärmebehandlungseinheit nach Anspruch 3, wobei die Warnvorrichtung ausgelöst wird, wenn das durch die Verarbeitungseinheit (26) detektierte Strahlungsniveau die maximale zulässige Bestrahlung (MZB), wie in der Norm IEC 60825-1 definiert, und/oder die Schutzgrenzbestrahlung (SGB), wie in der Norm IEC 60825-4 definiert, überschreitet.

5. Wärmebehandlungseinheit nach einem der Ansprüche 1 bis 4, wobei die Verkleidung (16) mindestens eine abnehmbare Wand (18) beinhaltet, die in einem vordefinierten Bereich der Kammer (4) angeordnet ist, wobei die Bilderfassungsvorrichtung (24) ferner dazu eingerichtet ist, Bilder im sichtbaren Bereich zu erfassen, wobei die Bilderfassungsvorrichtung (24) dazu eingerichtet ist, mindestens ein Bild des vordefinierten Bereichs zu erfassen, und die Verarbeitungsvorrichtung (26) dazu konfiguriert ist, das Vorhandensein oder Nichtvorhandensein der abnehmbaren Wand (18) in dem erfassten Bild zu detektieren.

6. Wärmebehandlungseinheit nach Anspruch 5, wobei die abnehmbare Wand (18) mindestens ein Identifikationselement (28) beinhaltet, wobei die Bilderfassungsvorrichtung (24) dazu eingerichtet ist, mindestens ein Bild des Identifikationselements (28) zu erfassen, wobei die Verarbeitungsvorrichtung (26) dazu konfiguriert ist, das Vorhandensein des Identifikationselements (28) in dem erfassten Bild zu detektieren.

7. Wärmebehandlungseinheit nach Anspruch 5 oder 6, wenn von Anspruch 2 abhängig, wobei die abnehmbare Wand (18) mindestens einen Teil der Öffnung (12) begrenzt.

8. Wärmebehandlungseinheit nach einem der Ansprüche 1 bis 7, wobei die Bilderfassungsvorrichtung (24) mindestens eine Kamera beinhaltet, die Bilder mindestens im Nahinfrarotbereich aufnimmt, wobei die Kamera so ausgerichtet ist, dass sich mindestens ein Teil der Verkleidung (16) in dem Rahmen der Kamera erstreckt.

9. Wärmebehandlungseinheit nach einem der Ansprüche 1 bis 8, wobei das Sicherheitssystem eine Vielzahl von Bilderfassungsvorrichtungen (24) beinhaltet, die dazu eingerichtet sind, jeweils mindestens ein Bild eines unterschiedlichen Bereichs der Verkleidung (16) zu erfassen, wobei die Verarbeitungsvorrichtung (26) dazu konfiguriert ist, das Vorhandensein einer Strahlungsleckage aus der Kammer (4) heraus zu identifizieren, wenn mindestens ein durch die Bilderfassungsvorrichtungen (24) erfasstes Bild eine zur Außenseite der Verkleidung (16) emittierte Strahlung zeigt.

10. Wärmebehandlungseinheit nach einem der Ansprüche 1 bis 9, wobei die Bilderfassungsvorrichtung (24) in Bezug auf die Kammer beweglich ist und/oder mindestens ein bewegliches Element beinhaltet, sodass die Bilderfassungsvorrichtung (24) Bilder einer Vielzahl von Bereichen der Verkleidung (16) erfasst, indem sie sich in Bezug auf die Kammer (4) bewegt, um das Vorhandensein oder Nichtvorhandensein von Strahlungsleckagen in den Bereichen zu detektieren.

## Claims

1. Heat treatment unit (1) for preforms (2) of a container manufacturing plant, said heat treatment unit comprising an enclosure (4) within which the preforms (2) travel along a predefined path (T) and at least one emitting wall (6) comprising at least one monochromatic or pseudo-monochromatic electromagnetic radiation emitting element arranged to emit said radiation towards the preforms (2) circulating in the enclosure (4), said enclosure (4) being closed at least in part by a shielding (16) arranged to prevent said radiation from passing through the shielding (16) towards the outside of the enclosure (4), the heat treatment unit being **characterized in that** it further comprises at least one safety system comprising at least one image acquisition device (24) arranged outside the shielding (16) and at least one image processing device (26) processing the images acquired by said image acquisition device (24), said image acquisition device (24) acquiring images at least in the near infrared domain, the images acquired by said image acquisition device (24) being able to show radiation emitted outside the shielding (16), the processing device (26) being configured to identify the presence of a radiation leak out of the enclosure (4) if at least one image acquired by said image acquisition device (24) shows radiation emitted outside the shielding (16).

2. Heat treatment unit according to Claim 1, wherein said shielding (16) has at least one opening (12) for entry and/or exit of the preforms (2) into and/or out of the enclosure (4), at least one image acquired by said image acquisition device (24) showing at least said opening (12).

3. Heat treatment unit according to Claim 1 or 2, wherein the safety system further comprises an alert device arranged to emit an alarm destined for an operator and/or to stop or prevent the operation of the heat treatment unit if the processing device (26) identifies the presence of a radiation leak out of the enclosure (4).

4. Heat treatment unit according to Claim 3, wherein the alert device is triggered when the radiation level detected by the processing device (26) exceeds the maximum permissible exposure (MPE) as defined in the standard IEC 60825-1 and/or the protective exposure limit (PEL) as defined in the standard IEC 60825-4.

5. Heat treatment unit according to any one of Claims 1 to 4, wherein the shielding (16) comprises at least one removable wall (18) arranged in a predefined zone of the enclosure (4), the image acquisition device (24) being further arranged to acquire images in the visible domain, said image acquisition device (24) being arranged to acquire at least one image of said predefined zone and the processing device (26) being configured to detect the presence or absence of said removable wall (18) in said acquired image.

6. Heat treatment unit according to Claim 5, wherein the removable wall (18) comprises at least one identification element (28), the image acquisition device (24) being arranged to acquire at least one image of said identification element (28), said processing device (26) being configured to detect the presence of said identification element (28) in said acquired image.

7. Heat treatment unit according to Claim 5 or 6 when dependent on claim 2, wherein the removable wall (18) delimits at least a portion of the opening (12).

8. Heat treatment unit according to any one of Claims 1 to 7, wherein the image acquisition device (24) comprises at least one camera capturing images at least in the near-infrared domain, said camera being oriented such that at least one portion of the shielding (16) extends within the frame of said camera.

9. Heat treatment unit according to any one of Claims 1 to 8, wherein the safety system comprises a plurality of image acquisition devices (24) arranged to each acquire at least one image of a different zone of the shielding (16), the processing device (26) being configured to identify the presence of a radiation leak out of the enclosure (4) if at least one image acquired by said image acquisition devices (24) shows radiation emitted outside the shielding (16).

10. Heat treatment unit according to any one of Claims 1 to 9, wherein the image acquisition device (24) is movable relative to the enclosure and/or comprises at least one movable member such that the image acquisition device (24) acquires images of a plurality of zones of the shielding (16) by moving relative to the enclosure (4) so as to detect the presence or absence of radiation leaks in said zones.
